# DEMANDE DE BREVET EUROPEEN

(11) **EP 4 790 017 A1**
(43) Date de publication de la demande: **12.08.2026**
(21) Numéro de dépôt: 26157981.7
(22) Date de dépôt: 11.02.2026
(51) Int. Cl.: C01B 17/74, C01B 17/90, B01D 61/46, C01F 11/46, C25B 1/22, B01D 61/44, B01D 61/02, B01D 61/58

(54) **PROCEDE DE PREPARATION D'UNE SOLUTION D'ACIDE SULFURIQUE A PARTIR DE PHOSPHOGYPSE**

(30) Priorité: 11.02.2025 FR 2501416
(71) Demandeur: Université Mohammed VI Polytechnique, Ben Guerir, 43150 (MA)
(72) Inventeur: KHALESS, Khaoula, 24000 EL JADIDA (MA); AGAYR, Khalid, 85000 TIZNIT (MA); BENHIDA, Rachid, 06000 NICE (FR)
(74) Mandataire: Gsmart

(57) **Abrégé**

La présente invention concerne un procédé de préparation d'une solution d"acide sulfurique à partir de phosphogypse. Le procédé commence par une lixiviation basique du phosphogypse, produisant un filtrat liquide riche en ions sulfates. Le procédé utilise ensuite un dispositif d'électrodialyse à membranes bipolaires (EDMB), qui comprend plusieurs compartiments (anodique, cathodique, acide, alimentation et basique) séparés par des membranes spécifiques. La solution riche en ions sulfates est introduite dans le compartiment d'alimentation de l'EDMB. En appliquant un courant électrique, de l'acide sulfurique et une base correspondante sont formés respectivement dans les compartiments acide et basique.

## Description

### DOMAINE DE L'INVENTION

La présente invention concerne un procédé de préparation d'une solution d'acide sulfurique à partir de phosphogypse. Le procédé comprend, après une première étape de lixiviation basique, la mise en œuvre d'une étape d'électrodialyse au moyen de membranes bipolaires.

### ETAT DE LA TECHNIQUE

Le phosphogypse est le principal sous-produit de la fabrication d'acide phosphorique. Il résulte de l'attaque d'un acide fort, notamment l'acide sulfurique, sur des minerais de phosphate, typiquement l'apatite, selon la réaction suivante :

Ca₁₀F₂(PO₄)₆ + ₁₀H₂SO₄ + 10nH₂O → 6H₃PO₄ + 10CaSO₄.nH₂O + 2HF (1)

Les quantités de PG produites annuellement sont importantes, i.e., la production d'une tonne d'acide phosphorique s'accompagne de la production de cinq tonnes de PG. Au niveau mondial, environ 7 milliards de tonnes de PG ont été produites jusqu'à présent, avec un taux de production actuel de 150 à 200 millions de tonnes par an (I. Hammas-Nasri, S. Elgharbi, M. Ferhi, K. Horchani-Naifer, et M. Férid, New J. Chem., vol. 44, no 19, p. 8010-8017, 2020, doi: 10.1039/D0NJ00387E).

Le PG se présente généralement sous la forme d'une poudre fine, humide et agrégée. Il est principalement constitué de sulfate de calcium mais il contient également des dérivés d'oxyde de soufre et, dans une moindre mesure, des substances organiques et inorganique comme des phosphates, des fluorites, et des impuretés à base de silicium, sodium, terres rares, aluminium, fer, pentoxyde de phosphore, fluor etc.

La production d'acide phosphorique par attaque acide de minerai phosphate telle qu'illustrée par la réaction (1) requiert des quantités importantes d'acide sulfurique. Ce dernier est généralement produit à partir du soufre élémentaire par des réactions oxydation. Lorsqu'aucun gisement de soufre naturel n'est à disposition dans le pays ou la région où est produit l'acide phosphorique, il est alors nécessaire d'importer du soufre en quantité considérable depuis l'étranger. A titre d'exemple, la consommation du soufre solide du groupe OCP comme matériau non renouvelable a atteint 6,87 millions de tonnes en 2021 (OCP Sustainibility Integrated Report. OCP group 2021).

La teneur importante en soufre du PG en fait un matériau hautement valorisable. La régénération d'acide sulfurique à partir du PG permettrait de réduire les coûts liés à l'importation depuis l'étranger et à diminuer l'impact environnemental de la production d'acide phosphorique.

Jusqu'à maintenant, plusieurs études ont été menées pour valoriser le phosphogypse, principalement par décomposition thermique à très hautes températures. Cependant, ce procédé est très énergivore en raison des températures élevées utilisées, très polluant en émission de gazes et très coûteux en termes d'installation.

Un besoin demeure donc pour la mise à disposition d'un procédé de revalorisation du phosphogypse en acide sulfurique qui soit économique en énergie et en coûts de fonctionnement, et écocompatible.

La production d'acide sulfurique par électrodialyse à partir de solutions de sulfate de sodium est décrite dans la littérature, par exemple dans les brevets US 3,135,673, US 5,098,532 ou US 4,561,945. L'électrodialyse est effectuée dans des cellules à 3 ou 4 compartiments comprenant des membranes échangeuses d'ions. Toutefois, les méthodes décrites ont été effectuées à l'échelle du laboratoire. Elles ne sont pas adaptées à une production à plus grande échelle ce qui entrainerait une consommation trop importante en énergie et une diminution de la pureté des produits. L'extraction du soufre à partir du phosphogypse par électrodialyse n'a donc jamais été décrite, *a fortiori* encore moins à l'échelle industrielle.

La présente invention vise donc à proposer un procédé de préparation d'acide sulfurique à partir du phosphogypse par électrodialyse adaptée à l'échelle industrielle, permettant d'obtenir un produit de haute pureté avec une faible consommation en énergie, tout en revalorisant le phosphogypse issu de la production d'acide phosphorique.

### EXPOSE DE L'INVENTION

La présente invention a pour objet un procédé de préparation d'acide sulfurique comprenant les étapes suivantes :
(a) lixiviation basique du phosphogypse par une solution aqueuse basique comprenant un agent chélatant, conduisant à la formation d'une solution de sel sulfate comprenant des ions sulfates ;
(b) fourniture d'un dispositif d'électrodialyse à membrane bipolaires (EDMB) (300) comprenant un compartiment anodique (301) comprenant une anode (308), un compartiment acide (302), un compartiment d'alimentation (303), un compartiment basique (304) et un compartiment cathodique (301') comprenant une cathode (309), alignés en séquence, dans lequel une première membrane bipolaire (305) est disposée entre le comportement anodique (301) et le compartiment acide (302), une membrane échangeuse d'anions (306) est disposée entre le compartiment acide (302) et le compartiment d'alimentation (303), une membrane échangeuse de cations (307) est disposée entre le compartiment d'alimentation (303) et le compartiment basique (304) et une seconde membrane bipolaire (305') est disposée entre le compartiment basique (304) et le compartiment cathodique (301') ;
(c) introduction dans le compartiment d'alimentation (303) de la solution de sel sulfate obtenue à l'étape (a), et application d'un courant électrique entre l'anode (308) et la cathode (309), les compartiments acide (302) et basique (304) comprenant respectivement une solution aqueuse Sa et Sb et les deux compartiments anodique (301) et cathodique (301') de la cellule comprenant une solution d'électrolytes;
(d) récupération d'une solution d'acide sulfurique en sortie du compartiment acide (302).

L'étape (b) peut être effectuée avant, pendant ou après l'étape (a), mais bien entendu avant l'étape (c).

Le procédé de l'invention comprend optionnellement les caractéristiques suivantes, seules ou en combinaison.

De préférence, la solution basique de l'étape (a) comprend une base choisie parmi le carbonate de sodium (Na₂CO₃), le carbonate de potassium (K₂CO₃), le carbonate de lithium (Li₂CO₃), le carbonate de magnésium (MgCO₃), le carbonate d'ammonium ((NH₄)₂CO₃ les bicarbonates correspondants, l'hydroxyde de sodium (NaOH), l'hydroxyde de potassium, l'hydroxyde de lithium et un agent chélatant tel que l'éthylène diamine tétra-acétate de sodium (EDTA-Na).

De manière préférée, la solution basique de l'étape (a) comprend une base choisie parmi le carbonate de sodium (Na₂CO₃), le carbonate d'ammonium ((NH₄)₂CO₃), les bicarbonates correspondants, et l'éthylène diamine tétra-acétate de sodium (EDTA-Na).

Dans certains modes de réalisation, lors de l'étape (c) un flux continu de solution de sel sulfate obtenue à l'étape (a) alimente le compartiment d'alimentation (303) du dispositif d'EDMB.

La solution d'acide sulfurique récupérée à l'étape (d) a typiquement une concentration allant de 0,2 à 2M.

Avantageusement, le procédé de l'invention comprend en outre une étape (e) de concentration de la solution d'acide sulfurique issue de l'étape (d), par un procédé thermique ou par osmose inverse, préférablement par osmose inverse.

Typiquement, une solution concentrée en base est récupérée en sortie du compartiment basique (304) et/ou une solution diluée de sel sulfate est récupérée en sortie du compartiment d'alimentation (303), lors de l'étape (d).

Avantageusement, le procédé de l'invention comprend en outre une étape (f) de concentration de la solution diluée de sel sulfate par un procédé d'électrodialyse conventionnelle. La solution de sel sulfate concentrée issue de l'étape (f) peut alors être mise à recirculer dans le compartiment d'alimentation (303) lors de l'étape (c).

### DEFINITIONS

Sauf indication contraire, les ratios indiqués dans la présente demande sont des ratios massiques et les pourcentages sont des pourcentages massiques.

Le terme « phosphogypse » désigne un sous-produit issu de la fabrication de l'acide phosphorique par voie humide, c'est-à-dire obtenu par réaction entre des minerais calciques fluorophosphatés et un acide fort tel que l'acide sulfurique.

Le terme « lixiviation » au sens de la présente invention désigne l'extraction d'un composé soluble à partir d'un résidu solide au moyen d'opérations de lavage. Lorsque le lavage est effectué au moyen d'une solution aqueuse basique, on parlera de « lixiviation basique ».

Le terme « membrane échangeuse d'anions » (MEA) désigne une membrane sélectivement perméable aux anions et imperméable aux cations et aux molécules neutres. Elle est constituée d'ionomères (polymères conducteurs d'ions) sélectifs des anions, sous la forme d'une couche d'épaisseur variable, généralement de fine épaisseur, comprenant typiquement des charges positives fixes en surface.

Le terme « membrane échangeuse de cations » (MEC) désigne une membrane sélectivement perméable aux cations et imperméable aux anions et aux molécules neutres. Elle est constituée d'ionomères (polymères conducteurs d'ions) sélectifs des cations, sous la forme d'une couche d'épaisseur variable, généralement de fine épaisseur, comprenant typiquement des charges négatives fixes en surface.

Le terme « membrane bipolaire » (MB) désigne une membrane constituée de deux couches accolées : une couche perméable aux anions et imperméable aux cations et une couche perméable aux cations et imperméable aux anions. Une membrane bipolaire comprend donc une MEA d'un côté et une MEC de l'autre. Une couche de catalyseur peut être intercalée entre les deux autres couches. Une membrane bipolaire est généralement utilisée pour le craquage de l'eau, c'est-à-dire la dissociation d'une molécule d'eau en un ion hydroxyde et un proton.

Le terme « électrodialyse » désigne un procédé d'extraction des ions. Il est mis en œuvre dans un dispositif d'électrodialyse comprenant plusieurs compartiments séparés par des membranes alternativement échangeuses d'anions et échangeuses de cations. Le nombre de compartiments dépend du nombre de membranes. Le dispositif comprend des électrodes assurant le passage d'un courant au travers des différents compartiments. Lors de l'application du courant, les anions franchissent les MEA vers l'anode et les cations franchissent les MEC vers la cathode. Par cette migration d'ions, la solution d'alimentation voit sa concentration en ions diminuer tandis que les compartiments annexes se chargent en cations d'une part et en anions d'autre part. Le compartiment d'alimentation est donc un compartiment de dilution tandis que les compartiments annexes sont des compartiments de concentration. Un compartiment de dilution alterne toujours avec un compartiment de concentration. Les substances non ionisées ne migrent pas.

### DESCRIPTION DES FIGURES

[Fig. 1] représente un schéma d'un procédé de récupération d'une solution d'acide sulfurique à partir d'une solution de sulfate de sodium à l'aide d'un dispositif d'EDMB (300) selon l'invention.
[Fig .2] représente un schéma du procédé de concentration d'une solution d'acide sulfurique par osmose inverse selon l'invention.
[Fig.3] représente un schéma du procédé de concentration d'une solution de sulfate de sodium par EDC selon l'invention.
[Fig.4A] représente l'évolution de la concentration des acides et bases par mise en œuvre du procédé de l'invention dans l'exemple 3 (tension 15V) à partir d'une solution à 0,75M de Na₂SO₄ commerciale ou issue de la lixiviation du PG.
[Fig 4B] représente l'évolution de la concentration de sulfate de sodium dans le compartiment d'alimentation pendant la mise en œuvre du procédé de l'exemple 3.
[Fig.5] représente l'évolution de la concentration des acides et bases par mise en œuvre du procédé de l'invention dans l'exemple 4.
[Fig.6] représente la variation de la conductivité des solutions saline, acide et basique a différentes concentrations pendant la mise en œuvre du procédé de l'invention dans l'exemple 4.
[Fig.7] représente les spectres FTIR de NaOH commercial ou du NaOH obtenu par le procédé de l'invention.

### DESCRIPTION DETAILLEE DE L'INVENTION

Le but de la présente invention est de remédier aux inconvénients précités de l'art antérieur et de proposer un procédé innovant, adapté à l'échelle industrielle et à bas coût de récupération d'acide sulfurique de haute pureté à partir de phosphogypse, sous-produit de la production d'acide phosphorique.

### Phosphogypse

Le phosphogypse utile dans le cadre de la présente invention résulte typiquement de l'action d'un acide fort, par exemple de l'acide sulfurique, sur une roche phosphatée.

Généralement, le phosphogypse comprend de 26 % à 40 % de CaO, de 30 % à 60 % de SO₃, moins de 3 % de SiO₂, moins de 2 % de P₂O₅, et moins de 2 % de F (% exprimé en poids). Le phosphogypse peut être soumis à une étape de prétraitement avant d'être envoyé à l'étape (a) de lixiviation basique. Le prétraitement a pour but d'éliminer la matière organique soluble et les impuretés macroscopiques.

L'étape de prétraitement peut consister en :
- une étape de calcination du phosphogypse à une température allant de 700 à 850°C ; ou
- une étape de lavage du phosphogypse avec une solution aqueuse.

De préférence, le prétraitement comprend une étape de lavage du PG par une solution aqueuse, notamment une solution aqueuse polaire protique, notamment l'eau ou un mélange eau/alcool. Cette étape peut être répétée plusieurs fois, par exemple jusqu'à 6 fois, en fonction de la nature du PG. Ce lavage permet notamment d'éliminer le reste d'acide phosphorique 'du PG. Il est possible de suivre l'évolution du pH des solutions de lavage pour vérifier l'élimination du phosphore : lorsque le pH de la solution de lavage est supérieur à 5, l'élimination du phosphore peut être considérée comme suffisante.

Dans certains modes de réalisation, chaque lavage est effectué avec un rapport massique solide/liquide (S/L), c'est-à-dire PG/solution aqueuse, allant de 1/2 à 1/4, notamment 1/2. Le lavage est typiquement effectué à température ambiante, avec un temps de contact liquide-solide allant de 10 min à 2 heures, préférablement un temps de contact de 15 min est suffisant.

### Etape a) de lixiviation basique

Le procédé selon l'invention comprend une étape (a) de lixiviation basique du phosphogypse (éventuellement prétraité) par une solution aqueuse basique conduisant à la formation d'une solution de sel sulfate, comprenant des ions sulfates SO₄²⁻.

La solution aqueuse basique contient une base qui se dissocie dans l'eau pour fournir un cation ayant une affinité avec les ions sulfates et un anion ayant une affinité avec les ions calcium.

L'étape de lixiviation basique permet de solubiliser le phosphogypse et de libérer les ions sulfates SO₄²⁻ et les ions calcium Ca²⁺ en solution. Le taux de solubilisation du phosphogypse dans la solution aqueuse basique peut être d'au moins de 90% en poids par rapport à la masse initiale, ou encore varier de 90 à 99% en poids. Généralement, le taux de solubilisation est au moins de 90% en poids, typiquement il va de 91 à 99% ou encore de 94 à 98% de la masse initiale de phosphogypse. Par taux de solubilisation, on désigne donc la quantité en poids de phosphogypse solubilisés par la solution basique par rapport à la masse initiale de phosphogypse.

Le rapport liquide/solide entre la solution aqueuse basique et le PG varie de 5/1 à 20/1, notamment de 16/1 à 10/1.

Les ions sulfates libérés en solution aqueuse s'associent par échange d'ions dans la solution basique avec le cation provenant de la base présente, i.e. formant un sel sulfate en solution. Il est entendu que les ions sulfates, associés au cation de la base, restent dissous en solution, sous une forme solvatée.

Les ions calcium eux s'associent typiquement avec l'anion issu de la base présente dans la solution aqueuse pour former une espèce qui sera éliminée du filtrat liquide, par exemple par précipitation et filtration solide ou par nanofiltration. Cette espèce peut être un résidu solide ou un complexe soluble.

La base présente dans la solution aqueuse basique est notamment choisie parmi le carbonate de sodium (Na₂CO₃), le carbonate de potassium (K₂CO₃), le carbonate de lithium (Li₂CO₃), le carbonate de magnésium (MgCO₃), le carbonate d'ammonium ((NH₄)₂CO₃), les bicarbonates correspondants, l'hydroxyde de sodium (NaOH), l'hydroxyde de potassium (KOH), l'hydroxyde de lithium (LiOH), et un agent chélatant tel que l'éthylène diamine tétra-acétate de sodium (EDTA-Na), de préférence la base est choisie parmi le carbonate de sodium (Na₂CO₃), le carbonate d'ammonium ((NH₄)₂CO₃), les bicarbonates correspondants et l'éthylène diamine tétra-acétate de sodium (EDTA-Na). Dans un mode de réalisation préféré, la base est le carbonate de sodium.

La solution basique a typiquement une concentration en base variant de 0,1 à 1,5M, préférablement de 0,3 à 1,2M.

L'EDTA est un agent chélatant capable de complexer les ions Ca²⁺. Dans un mode de réalisation particulier, la solution aqueuse peut comprendre l'EDTA-Na et une autre base parmi celle de la liste ci-dessus.

Préférablement, les ions sulfates libérés par le PG s'associent donc avec des ions sodium ou ammonium, encore plus préférablement des ions sodium.

La solution issue de la lixiviation basique du PG contient donc préférablement des ions sulfate sous la forme de sulfate de sodium ou de sulfate d'ammonium, notamment de sulfate de sodium.

Ces ions sulfate sont isolés par élimination des autres espèces et impuretés présentes dans la solution, notamment des espèces comprenant le calcium issu de la lixiviation du PG, par exemple par précipitation et filtration solide ou par nanofiltration.

En particulier, lorsque la base utilisée est un carbonate, les ions calcium s'associent préférablement avec les ions carbonates et précipitent sous la forme d'un résidu solide de carbonate de calcium. Ce résidu est séparé du filtrat par une filtration du solide/liquide.

Lorsque la base utilisée est l'EDTA-Na, les ions calcium sont complexés par l'agent chélatant EDTA. Le complexe est séparé du filtrat liquide par filtration membranaire, notamment par nano-filtration. Les membranes utiles à ce titre peuvent notamment être choisies parmi les membranes suivantes : DURACID NF 2540F fourni par SUEZ Water, FILMTEC^{™} NF270-2540 de DuPont, et Lewabrane^{®} NF 4040 de LANXESS.

Les méthodes de filtration mises en œuvre sont bien connues de l'homme du métier et permettent en outre d'éliminer d'autres impuretés métalliques telles que l'aluminium, le fer, le cadmium.

La solution de sel sulfate issue de l'étape (a) s'entend comme la solution de sel sulfate après élimination des autres espèces et impuretés présentes, notamment des espèces comprenant le calcium issu de la lixiviation du PG.

Typiquement, l'étape (a) de lixiviation basique est réalisée à un pH supérieur ou égal à 10 ou encore supérieur ou égal à 11, 12 et inférieur ou égal à 14.

Généralement, l'étape (a) de lixiviation basique est réalisée sous agitation, par exemple mécanique. L'étape (a) de lixiviation basique est réalisée typiquement durant une durée variant de 10 à 120 minutes, ou encore de 15 à 90 minutes, selon la base utilisée.

L'étape (a) de lixiviation basique est réalisée typiquement à une température variant de 20 à 80°C, ou encore de 20 à 70°C ou de 55 à 65°C. Généralement, l'étape (a) est réalisée à pression atmosphérique.

Dans un mode de réalisation, la solution de sel sulfate issue de l'étape (a) est directement introduite dans le compartiment d'alimentation lors de l'étape (c).

Dans un autre mode de réalisation, la solution de sel sulfate, après élimination des autres espèces et impuretés présentes dans la solution, notamment des espèces comprenant le calcium issu de la lixiviation du PG, peut être séchée pour donner un sel sulfate solide. Ce séchage se fait notamment par évaporation sous vide. Un tel séchage est par exemple approprié si le sel sulfate doit être stocké et/ou transporté avant d'être utilisé dans la suite du procédé de l'invention.

Le sel sulfate solide, notamment anhydre, récupéré après séchage est un sulfate de sodium, un sulfate d'ammonium, un sulfate de lithium, un sulfate de potassium ou un sulfate de magnésium selon la base utilisée lors de l'étape (a). Il s'agit préférentiellement du sulfate de sodium (Na₂SO₄) ou du sulfate d'ammonium ((NH₄)₂SO₄), plus préférablement du sulfate de sodium.

Le sel sulfate solide possède une pureté typiquement supérieure à 96%, notamment supérieure à 97%, plus particulièrement supérieure à 98%. La pureté est mesurée par ICP-MS.

Dans le cas où la solution de sel sulfate est séchée, elle est remise en solution avant d'être introduite dans la cellule d'électrodialyse lors de l'étape (c), typiquement à une concentration allant de 0,5 à 5M.

La solution obtenue ne comprend pas d'autres espèces que le sel sulfate obtenu précédemment. La pureté de la solution permet d'éviter un encrassement des membranes.

### Etape (b) : dispositif d'électrodialyse à membranes bipolaires

Le système d'électrodialyse à membrane bipolaires (EDMB) fourni à l'étape (b) comprend au moins 5 compartiments: un compartiment anodique comprenant une anode, un compartiment acide, un compartiment d'alimentation, un compartiment basique et un compartiment cathodique comprenant une cathode, alignés en séquence, dans lequel une première membrane bipolaire est disposée entre le comportement anodique et le compartiment acide, une membrane échangeuse d'anions est disposée entre le compartiment acide et le compartiment d'alimentation, une membrane échangeuse de cations est disposée entre le compartiment d'alimentation et le compartiment basique et une seconde membrane bipolaire est disposée entre le compartiment basique et le compartiment cathodique.

Le compartiment anodique et le compartiment cathodique sont chacun situés à une extrémité du dispositif de sorte que l'anode et la cathode sont opposées l'une à l'autre et le courant appliquées entre elles circule à travers l'ensemble des compartiments.

Par le terme « alignés en séquence », il est entendu que les compartiments sont disposés les uns à côtés des autres dans l'ordre de citation. Par exemple, le dispositif peut comprendre l'agencement suivant des membranes délimitant les compartiments:
Anode - MB - MEA - MEC - MB - Cathode

Le dispositif peut comprendre davantage de compartiments. Par exemple, d'autres compartiments respectivement séparés par une membrane échangeuse de cations, une membrane bipolaire et/ou une membrane échange d'anions peuvent être présents. Il est entendu que le dispositif ne comporte qu'un seul compartiment anodique et un seul compartiment cathodique, situés aux extrémités du dispositif et connectés entre eux pour assurer une bonne capture et neutralisation des gaz produits à la surface des électrodes.

Le dispositif comprend avantageusement entre 5 et 20 séquences MB-MEA-MEC, plus préférablement 10.

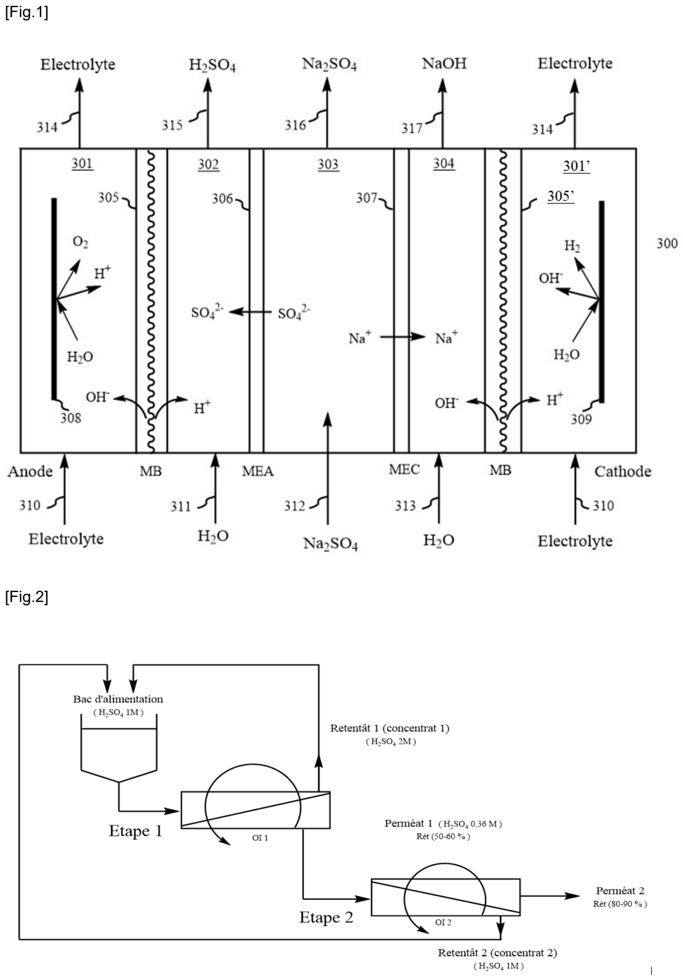

Un exemple de dispositif d'EDMB est tel que représenté sur la Figure 1.

Les membranes bipolaires présentes dans le dispositif comprennent une couche échangeuse d'anions et une couche échangeuse de cations. Les deux couches peuvent être en contact l'une avec l'autre sur toute la superficie d'une surface commune ou une couche de catalyseur peut être intercalée entre les deux couches. De préférence, la membrane contient une couche de catalyseur entre les deux couches échangeuses d'ions.

La membrane bipolaire disposée entre le compartiment anodique et le compartiment acide a typiquement sa couche échangeuse d'anions du côté du compartiment anodique, faisant face à l'anode, et la couche échangeuse de cation du côté du compartiment acide.

La membrane bipolaire disposée entre le compartiment cathodique et le compartiment basique a typiquement sa couche échangeuse de cations du côté du compartiment cathodique, faisant face à la cathode, et la couche échangeuse d'anions du côté du compartiment basique.

Les membranes bipolaires, échangeuses d'anions ou de cations sont préférablement choisies parmi des membranes polyéthersulfone, polyamide, polysulfone et leurs combinaisons.

Les membranes bipolaires présentes dans le dispositif peuvent être identiques ou différentes, de préférence elles sont identiques. Il s'agit notamment de la membrane PC bip-ED 64004 commercialisée par PCCell GmbH.

Lorsqu'il y en a plusieurs dans le dispositif, les MEA peuvent être identiques ou différentes, de préférence identique. Préférablement, la ou les MEA du dispositif sont indépendamment choisies parmi les membranes PC Acid 60-ED et PC Acid100-ED 64004 commercialisées par PCCell GmbH.

Lorsqu'il y en a plusieurs dans le dispositif, les MEC peuvent être identiques ou différentes, de préférence identique. Préférablement, la ou les MEC du dispositif sont indépendamment choisies parmi les membranes PC SK-ED et MV-ED 64004 commercialisées par PCCell GmbH.

Chacune des membranes est inerte vis-à-vis des molécules non chargées éventuellement présentes dans les compartiments.

### Etape (c): Electrodialyse

Lors de l'étape (c), la solution de sel sulfate obtenue à l'étape (a), préférablement une solution de sulfate de sodium ou de sulfate d'ammonium, est introduite dans le compartiment d'alimentation du dispositif d'électrodialyse.

En parallèle, le compartiment acide comprend une solution aqueuse Sa. Cette solution Sa peut être de l'eau, notamment de l'eau pure distillée, ou une solution aqueuse en faible concentration d'acide sulfurique. Lorsque la solution Sa est une solution d'acide sulfurique, sa concentration en acide sulfurique est typiquement inférieure à 0,05M, de préférence comprise entre 0,005M et 0,02M, encore plus préférablement égale à 0,01M.

En parallèle le compartiment basique comprend une solution aqueuse Sb. Cette solution Sb peut être de l'eau, notamment de l'eau pure distillée, ou une solution aqueuse en faible concentration de base, notamment d'hydroxyde de sodium ou hydroxyde d'ammonium selon le sel sulfate présente dans la solution issue de l'étape (d). Lorsque la solution Sb est une solution basique, sa concentration en base est typiquement inférieure à 0,05M, de préférence comprise entre 0,005M et 0,02M, encore plus préférablement égale à 0,01M.

Le fait de légèrement acidifier la solution Sa et basifier la solution Sb permet d'amorcer l'électrodialyse. En effet, la présence des ions au démarrage favorise la conductivité du courant au travers des compartiments.

Les compartiments anodique et cathodique comprennent une solution électrolytes, typiquement une solution de sulfate de sodium ou d'amidosulfonate d'ammonium préférentiellement de sulfate de sodium, par exemple à une concentration de 0,25M. La solution d'électrolyte est identique dans les compartiments anodique et cathodique.

Dans l'exemple illustré à la figure 1, une solution de sel sulfate 312 alimente le compartiment d'alimentation (303), une solution Sa 311 alimente le compartiment 302, une solution Sb (313) alimente le compartiment 304. Une solution électrolyte alimente les compartiments anodique 301 et cathodique 301'.

Un courant est appliqué entre la cathode et l'anode. De préférence, ce courant a une tension allant de 10 à 30 V, notamment de 20 à 25 V. Lors de l'application du courant, l'anode devient négativement chargée et la cathode devient positivement chargée. Les anions migrent donc vers l'anode et les cations migrent vers la cathode.

L'étape (c) peut être mise en œuvre selon deux variantes : en mode lot ou en mode continu.

En mode lot, un volume défini de la solution de sel sulfate obtenue à l'étape (a) à traiter est introduite dans le compartiment d'alimentation. Les compartiments annexes comprennent les solutions telles que décrites ci-dessus selon un volume défini également. Typiquement, le volume défini peut correspondre à la capacité du compartiment.

Le courant est alors appliqué durant une période suffisante pour que les migrations d'ions s'effectuent en totalité. La période d'application du courant dépend donc de la quantité de sel dans la solution à traiter. Typiquement, le courant est appliqué pendant un temps suffisant pour obtenir une solution de sel sulfate dilué en sortie du compartiment d'alimentation ayant une concentration inférieure ou égale à 0,5M, en particulier comprise dans une gamme allant de 0,2M à 0,5M. De préférence, le courant est appliqué jusqu'à atteindre la concentration maximale en acide sulfurique et en base respectivement dans les compartiments acide et basique. Cette concentration maximale dépend de la concentration en sel sulfate dans la solution d'alimentation.

Pour une concentration en sel sulfate allant de 1M à 2M, la concentration maximale en acide sulfurique est par exemple comprise dans une gamme allant de 0,2M à 0,5M, concentration atteinte par exemple en un temps de 4h à 6h.

Dans ce mode de réalisation, aucun flux liquide ne circule lors de l'application du courant.

Dans la seconde variante, en mode continu, un flux continu de solution de sel sulfate obtenue à l'étape (d) passe au travers du compartiment d'alimentation, avec un débit allant typiquement de 20 à 60 L/h.

En parallèle, un flux d'une solution aqueuse Sa alimente le compartiment acide, avec un débit allant de 20 à 60 L/h, et un flux d'une solution aqueuse Sb alimente le compartimente basique, avec un débit allant de 20 à 60 L/h.

Le temps de résidence des solutions doit être suffisant pour permettre une migration des ions efficace.

Dans la seconde variante, la concentration des solutions en sortie des compartiments acide, d'alimentation et basique, concentrations respectives en acide sulfurique, en sel sulfate et en base, sont donc directement dépendante du débit de chaque flux et du temps pendant lequel le procédé est mis en œuvre. Plus le débit est faible, plus le temps de résidence de chaque solution est long et plus les migrations d'ions telles que décrites après ont le temps de s'effectuer. Ainsi, plus le débit est faible, plus la concentration en acide sulfurique et en base sera élevée et plus la concentration en sel sulfate sera faible.

Les débits en entrée et en sortie des compartiments sont identiques.

En flux continu, la solution d'alimentation alimente le système pendant un temps suffisant pour obtenir la concentration désirée en acide sulfurique et/ou en base. La solution d'alimentation peut comprendre une solution neuve de sel sulfate issue de l'étape (a) et optionnellement le concentrât issu de l'étape (f) telle que décrite ci-dessous, en toute proportions.

N'étant pas limité par la quantité de sel sulfate alimentant le dispositif, le mode flux continu permet d'obtenir des concentrations en acide sulfurique et en base plus élevées que le mode batch. Typiquement le procédé est mis en œuvre pendant une durée suffisante pour obtenir une concentration en acide sulfurique dans la solution issue du compartiment acide variant de 0.5M à 2M, et/ou une concentration en base dans la solution issue du compartiment basique variant de 1M à 2M.

Dans un exemple particulier, un réservoir de solution de sel sulfate issu de l'étape (d) alimente le flux de solution d'alimentation, complété au cours du temps, en proportion de plus en plus importante par le concentrat issu de l'étape (f) jusqu'à épuisement de la solution de sel sulfate contenue dans le réservoir. Une nouvelle solution de sel sulfate peut alors être rechargée dans le réservoir pour poursuivre la concentration par EDMB.

### Les migrations d'ions

L'application du courant entre la cathode et l'anode, qui se trouvent chacune à une extrémité du dispositif, provoque la migration des ions d'un compartiment à l'autre.

Ainsi, les ions sulfates présents dans la solution de sel sulfate introduite dans le compartiment d'alimentation, migrent vers l'anode. Ils passent ainsi du compartiment d'alimentation au compartiment acide au travers de la membrane échangeuse d'anions. Le compartiment acide s'enrichit ainsi en ions sulfate tandis que le compartiment d'alimentation s'appauvrit en ions sulfates.

Au niveau de la membrane bipolaire disposée entre le compartiment anodique et le compartiment acide, une réaction de décomposition des molécules d'eau, aussi appelée craquage de l'eau, a lieu selon l'équation (2) suivante :

H₂O → H⁺ + OH⁻ (2)

Cette réaction a lieu à l'interface entre les deux couches échangeuses d'ions de la membrane bipolaire, le cas échéant au niveau de la couche de catalyseur.

Les ions OH⁻ migrent donc du côté du compartiment anodique, au travers de la couche échangeuse d'anions de la MB qui est du côté du compartiment anodique. Le compartiment anodique s'enrichit donc en ions OH⁻.

Les ions H⁺ migrent donc du côté du compartiment acide, au travers de la couche échangeuse de cations de la MB qui est du côté du compartiment acide. Le compartiment acide s'enrichit donc en ions H⁺. Ces ions H⁺ s'associent avec les ions sulfates SO₄²⁻ provenant du compartiment d'alimentation pour former l'acide sulfurique.

Au niveau de l'anode, une réaction d'oxydation de l'eau a lieu selon l'équation (3) suivante :

H₂O → 1/2 O₂ + 2 e⁻ + 2H⁺ (3)

Les ions H⁺ générés par la réaction (2) s'équilibrent avec les ions OH⁻ générés par la dissociation de l'eau au niveau de la MB.

Les contre-cations des ions sulfates dans la solution de sel sulfate issue de l'étape (a), typiquement des cations Na⁺ ou NH4⁺, migrent du compartiment d'alimentation vers le compartiment basique au travers de la membrane échangeuse de cations. Le compartiment basique s'enrichit ainsi en contre-cations, typiquement Na⁺ ou NH4⁺, tandis que le compartiment d'alimentation s'appauvrit en contre-cations.

La réaction (1) de dissociation de l'eau a également lieu au niveau de la MB disposée entre le compartiment cathodique et le compartiment basique. Les ions OH⁻ migrent du côté du compartiment basique, au travers de la couche échangeuse d'anions de la MB qui est du côté du compartiment basique. Le compartiment basique s'enrichit donc en ions OH⁻. Ces ions OH⁻ s'associent avec les contre-cations provenant du compartiment d'alimentation pour former une base, notamment l'hydroxyde de sodium ou de l'ammoniac NH₃.

Les ions H⁺ migrent donc du côté du compartiment cathodique, au travers de la couche échangeuse de cations de la MB qui est du côté du compartiment cathodique. Le compartiment cathodique s'enrichit donc en ions H⁺.

Au niveau de la cathode, une réaction de réduction de l'eau a lieu selon l'équation (3) suivante :

2 H₂O + 2 e⁻ → H₂ + 2 OH⁻ (3)

Les ions OH- générés par la réaction (3) s'équilibrent avec les ions H⁺ générés par la dissociation de l'eau au niveau de la MB.

Dans l'exemple illustré à la figure 1, les ions sulfates issus de la solution de sel sulfate 312 passent du compartiment d'alimentation 303 au compartiment acide 302 au travers de la MEA 306. La réaction de craquage de l'eau ayant lieu au niveau de la MB 305 génèrent des ions H⁺ qui migrent vers le compartiment acide 302 et des ions OH⁻ qui migrent vers le compartiment anodique 301. La réaction d'oxydation de l'eau au niveau de l'anode 308 génère de l'oxygène et des ions H⁺ qui vont rester dans le compartiment anodique 301. Le contre-cation des sulfates dans la solution de sel sulfate 312 passent du compartiment d'alimentation 303 au compartiment basique 304 au travers de la MEC 307. La réaction de craquage de l'eau ayant lieu au niveau de la MB 305' génèrent des ions H⁺ qui migrent vers le compartiment cathodique 301' et des ions OH⁻ qui migrent vers le compartiment basique 304. La réaction de réduction de l'eau au niveau de la cathode 309 génère de l'hydrogène et des ions OH- qui vont rester dans le compartiment cathodique 301'.

### Etape (d) : récupération de la solution d'acide sulfurique

Conformément aux migrations d'ions décrites ci-dessus et sur la figure 1, une solution d'acide sulfurique est récupérée en sortie du compartiment acide.

Cette solution d'acide sulfurique possède de préférence une concentration en H₂SO₄ allant de 0,2 à 2M, tel que décrit ci-dessus.

Cette solution d'acide sulfurique possède une pureté allant de 98% à 99%.

En parallèle, une solution basique est récupérée en sortie du compartiment basique. La base dépend du contre cation du sulfate dans la solution de sel sulfate de l'étape (d). Typiquement, il s'agit d'une solution d'hydroxyde de sodium ou d'ammoniac.

Cette solution basique possède de préférence une concentration en base allant de 0,1M à 2,5M

En sortie du compartiment d'alimentation, une solution diluée de sel sulfate est récupérée, appelée diluât, ayant typiquement une concentration en sel sulfate inférieure ou égale à 0,5M, en particulier comprise dans une gamme allant de 0,2M à 0,5M.

### Etape (e): concentration de la solution d'acide sulfurique

Dans un mode de réalisation, le procédé de l'invention comprend une étape (e) mise en œuvre à la suite de l'étape (d), comprenant la concentration de la solution d'acide sulfurique issue de l'étape (d).

De préférence, l'étape (e) permet d'obtenir une solution ayant une concentration en acide sulfurique allant de 1,7 à 2M, préférablement 2M.

Dans un mode de réalisation, cette étape de concentration se fait via un procédé thermique. Dans un tel mode de réalisation, la solution d'acide sulfurique issue de l'étape (f) est chauffée à une température allant de 150°C à 200°C, de préférence sous vide.

Dans un autre mode de réalisation, cette étape de concentration se fait via un procédé d'osmose inverse. Dans un tel mode de réalisation, la solution d'acide sulfurique est introduite dans un premier module d'osmose inverse comprenant une membrane semi-perméable. Une pression supérieure à la pression osmotique de la solution est appliquée de sorte à ce qu'une partie de l'eau de la solution traverse la membrane jusqu'à obtenir une concentration désirée de la solution d'acide sulfurique. L'eau qui passe au travers de la membrane constitue le perméat. La solution d'acide sulfurique concentrée récupérée constitue le rétentat ou le concentrât.

Le perméat issu du premier module peut comprendre une faible concentration en acide sulfurique. Typiquement, le perméat issu du premier module a une concentration en acide sulfurique inférieure ou égale à 50%, notamment comprise dans une gamme allant de 35 à 45%, de la concentration en H₂SO₄ de la solution issue de l'étape (d).

Optionnellement, le perméat issu du premier module d'osmose inverse est donc introduit dans un second module d'osmose inverse. Le rétentat de second module a une concentration en acide sulfurique supérieure à celle de la solution d'acide sulfurique issue de l'étape (f). Typiquement, le perméat issu du second module a une concentration en acide sulfurique inférieure ou égale à 15%, notamment inférieure ou égale à 10%, de la concentration en H₂SO₄ de la solution issue de l'étape (d).

Le rétentat issu du premier module et/ou du second module peut subir autant de cycle d'osmose inverse que nécessaire pour obtenir la concentration en acide sulfurique désirée. Le cas échéant, le ou les rétentat(s) peuvent être réintroduit dans le premier module et optionnellement, à la suite, dans le second module, pour être concentrés de nouveau, dans un système en boucle. La recirculation du rétentat en boucle fermée permet d'augmenter la vitesse d'écoulement aux membranes et réduire ainsi leur colmatage.

La membrane semi-perméable d'osmose inverse est notamment Filmtech^{™} SW/30-2540 commercialisée par Dupont. La membrane du premier et celle du second module peuvent être identiques ou différentes, de préférence identiques.

La filtration par osmose inverse est typiquement réalisée à une température allant de 25 à 100°C, de préférence de 25 à 40°C, et/ou sous une pression absolue allant de 2 à 40 bars, de préférence de 20 à 30 bars.

Dans un exemple de réalisation illustré à la figure 2, la solution d'acide sulfurique issue de l'étape (d) contenue dans un bac d'alimentation, ayant une concentration en H₂SO₄ de 1M, est introduite dans un premier module OI1 comprenant une membrane semi perméable. Le rétentat ayant une concentration en H₂SO₄ de 2M est mis à recirculer dans le bac d'alimentation et le perméat 1 ayant une concentration en acide sulfurique de 0,36M est introduit dans un second module OI2. Le rétentat 2 ayant une concentration en H₂SO₄ de 1M est remis à circuler dans le bac d'alimentation et le perméat 2 est récupéré.

### Etape (e'): concentration de la solution basique

Dans un mode de réalisation, le procédé de l'invention comprend une étape (e') mise en œuvre à la suite de l'étape (d), comprenant la concentration de la solution de base issue de l'étape (f).

De préférence, l'étape (e') permet d'obtenir une solution ayant une concentration en base allant de 1,7 à 2M, préférablement 2M.

Dans un mode de réalisation, cette étape de concentration se fait via un procédé thermique. Dans un tel mode de réalisation, la solution de base issue de l'étape (d) est chauffée à une température allant de 60°C à 180°C, de préférence 90°C et sous vide.

La solution de base est notamment une solution d'hydroxyde de sodium ou d'ammoniac.

### Etape (f) : Concentration du diluât issu de l'étape (d)

Dans un mode de réalisation, le diluât issu de l'étape (d) est concentré, en particulier via un procédé d'électrodialyse conventionnelle (EDC).

Le terme « électrodialyse conventionnelle » désigne un procédé mis en œuvre dans un dispositif comprenant des MEA et des MEC disposées en alternance les unes des autres, et une cathode et une anode toutes deux situées aux extrémités du dispositif. En EDC, le dispositif ne comprend pas de membrane bipolaire. Par exemple, le dispositif peut comprendre l'agencement suivant :
Anode - MEC1 - MEA1 - MEC2 - MEA2 - MEC3 - MEA3 - MEC4 - Cathode

Le système utilisé dans la présente invention peut comprendre de 5 à 30 MEA et MEC en alternance, de préférence 10 membranes.

Lors de l'étape (f), le diluât issu de l'étape (d) est chargé au sein d'un dispositif EDC et un courant est appliqué entre les deux électrodes, avec une tension allant préférablement de 10 à 30V, notamment de 20 à 25V.

La solution reconcentrée en sel sulfate issue de l'étape (f) a typiquement une concentration allant de 1 à 2M, notamment 1,5M. Ce concentrat peut optionnellement être mis à recirculer dans le dispositif EDMB avec la solution d'alimentation lors de l'étape (c).

Le diluât de l'étape (f) peut être réutilisé pour approvisionner les compartiments acide et/ou basique en tant que solution Sa et/ou Sb, la présence en très faible concentration d'ions étant utile pour amorcer l'électrodialyse et favoriser la conductivité.

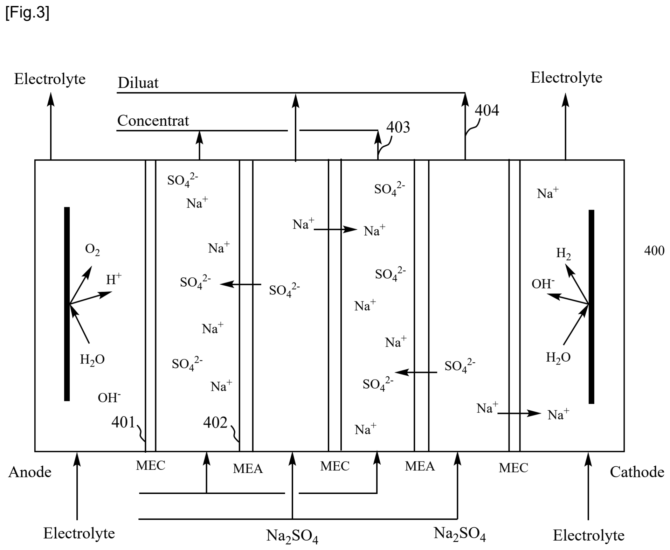

Un exemple de concentration du diluât issu de l'étape (d) consistant en une solution diluée de sulfate de sodium est illustré à la figure 3. Un dispositif d'EDC 400 comprend un compartiment anodique, comprenant une anode, séparé d'un compartiment de concentration par une MEC 401. Le compartiment de concentration est séparé d'un compartiment de dilution par une MEA 402. Ce schéma est répété une fois et le dernier compartiment de dilution est séparé par une MEC du compartiment cathodique comprenant une cathode. Les compartiments anodique et cathodique sont chargés avec une solution d'électrolytes. Les compartiments de dilution sont chargés avec le diluât de sulfate de sodium. En sortie des compartiments de concentration sont récupérés les concentrât en sulfate de sodium 403 et en sortie des compartiments de dilution sont récupérés les diluâts 404.

### EXEMPLES

### Exemple 1: Lixiviation du PG

Le PG a été solubilisé dans différentes solutions basiques/ Les rapports liquide/solide, les concentrations en base des solutions basique, le temps de contact PG/solution basique et le taux de conversion sont indiqués dans le tableau 1 suivant.

**Tableau 1 : Conversion du PG à différentes concentrations en utilisant différentes bases (EDTA, Na₂CO₃, NH₄HCO₃, (NH₄)₂CO₃).**

| **Base** | **L/S** | **Temps** (min) | **Concentration** (Mol/l) | **Conversion** (% ) |
|---|---|---|---|---|
| EDTA | 16 | 15 | 0,3 | 79,8 |
| | | | 0,4 | 93,7 |
| | | | 0,5 | 94,8 |
| Na₂CO₃ | 10 | 60 | 0,4 | 54,4 |
| | | | 0,5 | 77 |
| | | | 0,6 | 97,7 |
| NH₄HCO₃ | 10 | 90 | 1 | 77,9 |
| | | | 1,1 | 87,8 |
| | | | 1,2 | 95,6 |
| (NH₄)₂CO₃ | 10 | 90 | 0,52 | 71 |
| | | | 0,58 | 85,5 |
| | | | 0,62 | 94,5 |

Le taux de conversion correspond a la proportion de sel sulfate, dans le cas d'espèce de sulfate de sodium, récupéré par lixiviation du PG par rapport à celle présente initialement dans le PG. Le taux de conversion est donc calculé via l'équation suivante : $Taux de conversion = m {\left({SO}_{4}^{2 -}\right)}_{F} / m {\left({SO}_{4}^{2 -}\right)}_{PG} \times 100$ où m(SO₄²⁻⁾_{PG} est la masse de SO₄²⁻ dans le PG et m(SO₄²⁻)_{F} est la masse de SO₄²⁻ dans le filtrat.

### Exemple 2 : Mesure de l'encrassement du système d'électrodialyse à membrane bipolaire (EDMB)

La mesure de la capacité d'encrassement d'une solution du sulfate de sodium dans le système EDMB est nécessaire afin d'éviter le colmatage irréversible des membranes. À cet effet, des mesures avec l'indice de colmatage (Silt Density Index ou SDI) ont été réalisées. Ce test mesure le rythme auquel un filtre de 0,45 micron est obstrué lorsqu'il est soumis à une pression hydraulique constante.

Pour déterminer le SDI, un montage expérimental (cellule agitée AMICON^{®}) a été adopté. De l'acétate de cellulose Milli-pore avec des microfiltres de 0,45 µm, ont été utilisés pour toutes les expériences de filtration, à une pression de 2,1 bars. L'indice a été calculé par la formule suivante : $SDI = \frac{100 %}{T} \left(1-\frac{{t}_{i}}{{t}_{f}}\right)$

Où ***tᵢ*** est le temps de filtration initial d'un volume fixe (500 ml) en secondes, ***t_{f}*** est le temps de filtration final d'un volume fixe (500 ml) en secondes, et ***tₜ*** le temps total écoulé de l'expérience en minutes (5, 10 ou 15 min).

**Tableau 2 : Valeurs SDI mesurées pour différentes solutions**

| | **SDI₅** | **SDI₁₀** | **SDI₁₅** |
|---|---|---|---|
| **Na₂SO₄ Synthétique** | **0.30** | **0.15** | **0.11** |
| **Na₂SO₄ provenant du PG** | **0.89** | **0.42** | **0.36** |
| **(NH₄)₂SO₄ provenant du PG** | **0,39** | **0,26** | **0,2** |
| **Filtrat EDTA** | **0.37** | **0.21** | **0.17** |

Les résultats du tableau 3 présente les valeurs des SDI des solutions issues du PG. Les valeurs SDI mesurées étaient inférieur à 1. Par conséquent, les membranes d'électrodialyse ne nécessitent pas de nettoyage fréquent, et peuvent rester plusieurs mois sans encrassement colloïdal.

### Example 3 : Electrodialyse d'une solution de Na₂SO₄ commerciale, en mode lot

Une solution de sulfate de sodium commerciale (Na₂SO₄, >99 % en poids) fournie par SOLVACHIM, à une concentration de 1,5M, alimente le compartiment d'alimentation central d'une cellule d'électrodialyse à membrane bipolaire telle qu'illustrée à la figure 1 (empilement de 10 triplets de membranes avec : PC Acid 60 comme MEA, PC-SK comme MEC et PC Bip-ED 64004 comme membrane bipolaire, fournis par PCCell GmbH.

Les compartiments acide et basique sont alimentés respectivement en acide sulfurique et en hydroxyde de sodium a une faible concentration de 0.01 mol/L. Une intensité/tension du courant de 2A/25 V a été appliquée entre les électrodes. Les compartiments anodique et cathodique sont alimentés par une solution de sulfate de sodium à une concentration de 0.25 mol/L, afin d'absorber les gazes (H₂ et O₂) produites à la surface des électrodes.

Les résultats de l'électrodialyse sont décrits dans le tableau 3 ci-dessous.

**Tableau 3 : Suivi des résultats obtenus pour l'EDMB d'une solution commerciale de Na2SO4**

| | | **H₂SO₄** | | **NaOH** | | **Na₂SO₄** |
|---|---|---|---|---|---|---|
| | **Temp s** | **Concentratio n** | **SEC** | **Concentration** | **SEC** | **Concentration** |
| | **min** | **mol/l** | **Kwh/mo l** | **mol/l** | **Kwh/mol** | **mol/l** |
| 0 | 1,00 | 0,01 | 0 | 0,01 | 0 | 1,3 |
| 1 | 155,00 | 0,23 | 0,56 | 0,71 | 0,16 | 1,08 |
| 2 | 245,00 | 0,37 | 0,58 | 1,04 | 0,17 | 0,96 |
| 3 | 335,00 | 0,50 | 0,63 | 1,24 | 0,19 | 0,88 |

Après environ 6h, une concentration en acide sulfurique de 0.5M (49 g/L) est atteinte dans la solution issue du compartiment acide et une concentration en hydroxyde de sodium de 1.24M (49.6g/L) est atteinte dans la solution issue du compartiment basique.

Le diluât en sortie du compartiment d'alimentation a une concentration de 0.88 mol/L en sulfate de sodium.

### Exemple 4 : Electrodialyse d'une solution de Na2SO4 issue de la lixiviation du PG par du carbonate de sodium, en mode lot

Une solution de sulfate de sodium issu de la lixiviation du PG par du carbonate de sodium, à une concentration de 1,5 mol/L, alimente le compartiment d'alimentation central d'une cellule d'électrodialyse à membrane bipolaire telle qu'illustrée à la figure 1, dans les mêmes conditions qu'à l'exemple 3.

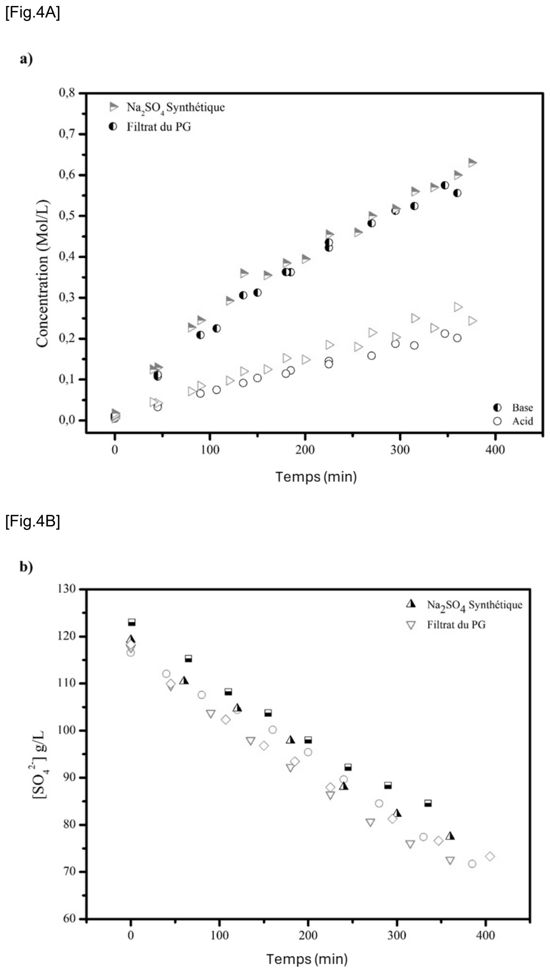

La concentration en acide sulfurique et en hydroxyde de sodium des solutions issues du compartiment acide et du compartiment basique respectivement augmente au cours du temps tel qu'illustré à la figure 4A. Le flux d'ions sulfate du compartiment basique vers le compartiment acide est illustré à la figure 4B.

Plusieurs paramètres ont été étudiés afin de mettre en place une configuration optimale des paramètres pour produire les solutions d'acide sulfurique et basique avec une concentration importante. Le tableau suivant résume les résultats des essais effectués.

**Tableau 4 : Effet des conditions expérimentales sur la concentration des produits.**

| **Voltage** | **Concentration de Na₂SO₄** | **Volume** | **Temps d'atteinte de l'équilibre^{a}** | **Concentration des produits** | |
|---|---|---|---|---|---|
| | | | | **H₂SO₄** | **NaOH** |
| **V** | **Mol /L** | **L** | **min** | **Mol /L** | **Mol /L** |
| 15 | 0.75 | 1 | 345 | 0.21 | 0.57 |
| 15 | 1.5 | 1 | 340 | 0.22 | 0.67 |
| 15 | 2 | 1 | 345 | 0.23 | 0.71 |
| 10 | 1.5 | 1 | 360 | 0.11 | 0.33 |
| 15 | 1.5 | 1 | 360 | 0.23 | 0.7 |
| 25 | 1.5 | 1 | 360 | 0.54 | 1.1 |
| 25 | 1 | 0.5 | 220 | 0.35 | 0.6 |
| 25 | 1 | 1 | 270 | 0.48 | 0.84 |
| 25 | 1 | 2 | 240 | 0.32 | 0.97 |

| | | | | | |
|---|---|---|---|---|---|
| *^{a}temps nécessaire pour atteindre un plateau de concentration en H₂SO₄ et en NaOH* | | | | | |

Comme le montre le tableau 4, la concentration en H₂SO₄ et en NaOH augmente avec la tension. Cela s'explique par l'augmentation de la migration des ions SO₄²⁻ et Na⁺ dans le compartiment acide et le compartiment basique respectivement, sous une densité de courant plus élevée. En outre, le taux de dissociation de l'eau a également été accéléré avec l'augmentation du courant selon le deuxième effet de Wien [9].

En outre, à concentration égale en sulfate de sodium dans la solution d'alimentation, un volume de solution plus faible, i.e. une quantité moindre de Na₂SO₄, permet d'atteindre un plateau de concentration en H₂SO₄ et NaOH dans les solutions en sortie plus rapidement (cf. 3 dernières lignes du tableau 4).

### Exemple 5 : Electrodialyse d'une solution de Na2SO4 issue de la lixiviation du PG par du carbonate de sodium, en mode flux continu

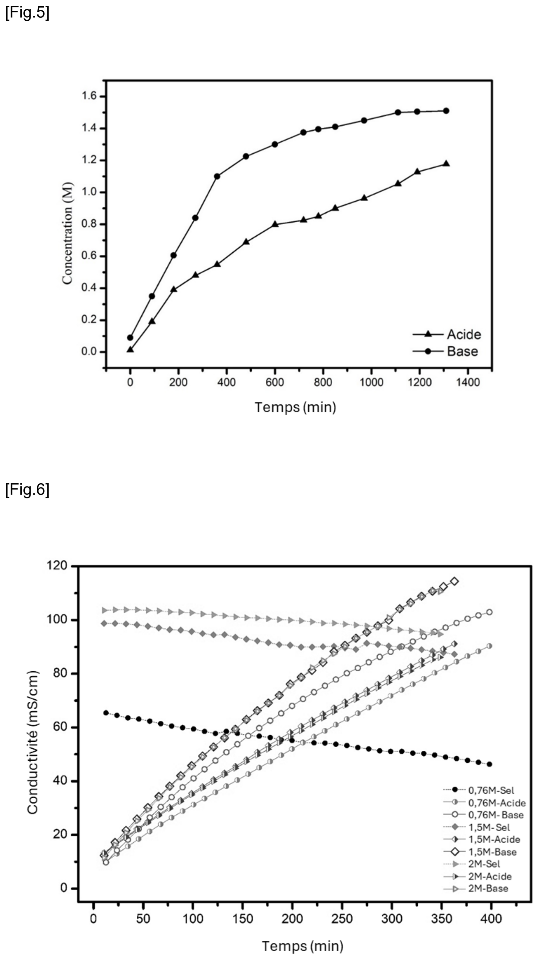

Dans cet exemple, une production en série a été réalisée dans laquelle la solution d'alimentation est remplacée par une autre riche en sulfate de sodium toutes les 6h, en conservant les produits obtenus pour augmenter leur concentration. Les autres paramètres sont maintenus stables (un débit fixe de 20 L/h, tension de 25 V). Les résultats obtenus sont présentés dans la figure 5. La production en série a permis d'augmenter la concentration de l'acide sulfurique à 1M (98g/L) et de la base NaOH à une concentration de 1,5M (60g/L).

La concentration d'acide sulfurique et de soude a augmenté de façon monotone, ce qui est confirmé par le suivi de la conductivité dans le temps (Figure 6). Le flux d'ions sulfate et sodium a augmenté vers le compartiment acide et le compartiment base respectivement.

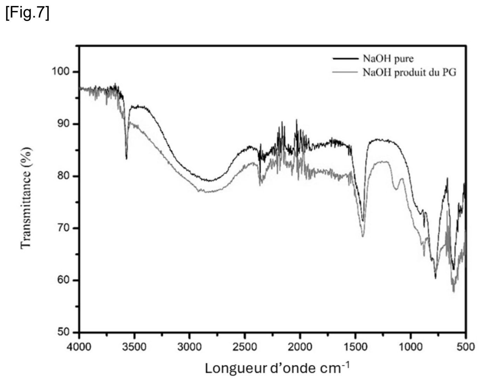

Les résultats de l'analyse physique par IR montrent que le NaOH produit par le procédé d'électrodialyse à membrane bipolaire est similaire à celle d'un produit pur figure 7.

## Revendications

1. Procédé de préparation d'acide sulfurique comprenant les étapes suivantes :
(a) lixiviation basique du phosphogypse par une solution aqueuse basique comprenant un agent chélatant, conduisant à la formation d'une solution de sel sulfate comprenant des ions sulfates ;
(b) fourniture d'un dispositif d'électrodialyse à membrane bipolaires (EDMB) (300) comprenant un compartiment anodique (301) comprenant une anode (308), un compartiment acide (302), un compartiment d'alimentation (303), un compartiment basique (304) et un compartiment cathodique (301') comprenant une cathode (309), alignés en séquence, dans lequel une première membrane bipolaire (305) est disposée entre le comportement anodique (301) et le compartiment acide (302), une membrane échangeuse d'anions (306) est disposée entre le compartiment acide (302) et le compartiment d'alimentation (303), une membrane échangeuse de cations (307) est disposée entre le compartiment d'alimentation (303) et le compartiment basique (304) et une seconde membrane bipolaire (305') est disposée entre le compartiment basique (304) et le compartiment cathodique (301') ;
(c) introduction dans le compartiment d'alimentation (303) de la solution de sel sulfate obtenue à l'étape (a), et application d'un courant électrique entre l'anode (308) et la cathode (309), les compartiments acide (302) et basique (304) comprenant respectivement une solution aqueuse Sa et Sb et les deux compartiments anodique (301) et cathodique (301') de la cellule comprenant une solution d'électrolytes;
(d) récupération d'une solution d'acide sulfurique en sortie du compartiment acide (302).

2. Procédé selon la revendication 1, dans lequel la solution basique de l'étape (a) comprend une base choisie parmi le carbonate de sodium (Na₂CO₃), le carbonate de potassium (K₂CO₃), le carbonate de lithium (Li₂CO₃), le carbonate de magnésium (MgCO₃), le carbonate d'ammonium ((NH₄)₂CO₃), les bicarbonates correspondants, l'hydroxyde de sodium (NaOH), l'hydroxyde de potassium, l'hydroxyde de lithium, et un agent chélatant tel que l'éthylène diamine tétra-acétate de sodium (EDTA-Na), de préférence la base est choisie parmi le carbonate de sodium (Na₂CO₃), le carbonate d'ammonium ((NH₄)₂CO₃), les bicarbonates correspondants et l'éthylène diamine tétra-acétate de sodium (EDTA-Na).

3. Procédé selon la revendication 1 ou 2, dans lequel lors de l'étape (c) un flux continu de solution de sel sulfate obtenue à l'étape (a) alimente le compartiment d'alimentation (303) du dispositif d'EDMB (300).

4. Procédé selon l'une quelconque des revendications 1 à 3, dans lequel la solution d'acide sulfurique récupérée à l'étape (d) a une concentration allant de 0,2 à 2M.

5. Procédé selon l'une quelconque des revendications 1 à 4, comprenant en outre une étape (e) de concentration de la solution d'acide sulfurique issue de l'étape (d), par un procédé thermique ou par osmose inverse, préférablement par osmose inverse.

6. Procédé selon l'une quelconque des revendications 1 à 5, dans lequel une solution concentrée en base est récupérée en sortie du compartiment basique (304) et/ou une solution diluée de sel sulfate est récupérée en sortie du compartiment d'alimentation (303), lors de l'étape (d).

7. Procédé selon la revendication 6, comprenant en outre une étape (f) de concentration de la solution diluée de sel sulfate par un procédé d'électrodialyse conventionnelle.

8. Procédé selon la revendication 7, dans lequel la solution de sel sulfate concentrée issue de l'étape (f) est mise à recirculer dans le compartiment d'alimentation (303) lors de l'étape (c).
